# EUROPEAN PATENT APPLICATION

(11) **EP 2 833 465 A1**
(43) Date of publication of application: **04.02.2015**
(21) Application number: 14178881.0
(22) Date of filing: 29.07.2014
(51) Int. Cl.: H01M 10/0525, H01M 4/131, H01M 4/133, H01M 4/04, H01M 4/1391, H01M 4/505, H01M 4/525, H01M 4/02, H01M 10/0562, H01M 10/0585

(54) **All-solid-state cell**

(30) Priority: 31.07.2013 JP 2013158798
(71) Applicant: NGK Insulators, Ltd., Nagoya-city, Aichi 467-8530 (JP)
(72) Inventor: Otsuka, Haruo, Nagoya-city,, Aichi 467-8530 (JP); Hashimoto, Naomi, Nagoya-city,, Aichi 467-8530 (JP); Yoshida, Toshihiro, Nagoya-city,, Aichi 467-8530 (JP); Kitoh, Kenshin, Nagoya-city,, Aichi 467-8530 (JP)
(74) Representative: TBK

(57) **Abstract**

An all-solid-state lithium-ion battery cell (10) contains at least a positive electrode layer (12), a solid electrolyte layer (14), and a negative electrode layer (16), which are arranged in a stack. The positive electrode layer (12) contains only a positive electrode active material (e.g. LiCoO2), and a predetermined crystal plane (e.g. a (003) plane) of the positive electrode active material is oriented in a direction of lithium ion conduction. The negative electrode layer (16) contains a carbonaceous material (e.g. an amorphous carbon material, possibly pre-doped with lithium), and the volume ratio of the carbonaceous material to the negative electrode layer (16) is 70% or greater.

## Description

### BACKGROUND OF THE INVENTION

### Field of the Invention:

The present invention relates to an all-solid-state cell.

### Description of the Related Art:

In recent years, with the advancement of portable devices such as personal computers and mobile phones, demand for batteries that can be used as power sources for such devices has been increasing rapidly. In cells of batteries for such purposes, a liquid electrolyte (an electrolytic solution) containing a combustible organic diluent solvent has been used as an ion transfer medium. Cells using such an electrolytic solution can cause problems of solution leakage, ignition, explosion, etc.

In view of solving these problems, all-solid-state cells, which use a solid electrolyte instead of the liquid electrolyte and contain only solid components to ensure intrinsic safety, are being developed. The all-solid-state cell contains the solid electrolyte, and therefore rarely causes problems such as ignition, does not cause liquid leakage, and the battery performance thereof is scarcely deteriorated by corrosion.

Known all-solid-state cells include those described in Japanese Patent No. 5043203 and Japanese Laid-Open Patent Publication No. 2000-123835.

Japanese Patent No. 5043203 primarily describes a secondary battery using an electrolytic solution, and as a modification, further describes an all-solid-state cell using an organic or inorganic solid electrolyte. In an example of the all-solid-state cell, a layered oriented sheet having a layered rock salt structure is used as a positive electrode, a specific crystal plane of the oriented sheet is oriented in a direction intersecting the direction of a plate surface of particle, and a lithium metal sheet is used as a negative electrode.

A carbon material may be used in the negative electrode. In this case, as described in Japanese Laid-Open Patent Publication No. 2000-123835, similar to the case of the positive electrode, the carbon material is mixed with a conductive material and a binder, an appropriate solvent is added if necessary, and a resultant paste made up of the negative electrode material is applied to a surface of a collector and dried.

### SUMMARY OF THE INVENTION

In the case of using a lithium metal in the negative electrode, lithium ions (Li⁺) are readily emitted from and inserted into a particular portion. In a charge-discharge cycle, the lithium ions are eluted preferentially from the particular portion, whereby the negative electrode becomes deformed. Therefore, the contact area between the negative electrode and the solid electrolyte layer decreases, and the charge-discharge cycle characteristic is deteriorated. The same problem also occurs in the case of using an alloy such as a lithium alloy in the negative electrode.

In the case of using a carbon material in the negative electrode, energy density can be improved only to a limited extent because, as described above, the carbon material is mixed with the conductive material and the binder, and an appropriate solvent is added if necessary in order to prepare a negative electrode material paste.

In view of the above problems, an object of the present invention is to provide an all-solid-state cell, which is capable of improving both energy density and the charge-discharge cycle characteristic.
[1] An all-solid-state cell according to the present invention includes at least a positive electrode layer, a solid electrolyte layer, and a negative electrode layer, which are arranged in a stack. The positive electrode layer contains only a positive electrode active material, and a predetermined crystal plane of the positive electrode active material is oriented in a direction of lithium ion conduction. The negative electrode layer contains a carbonaceous material, and a volume ratio of the carbonaceous material to the negative electrode layer is 70% or greater.
   Since the negative electrode layer contains the carbonaceous material, during charge and discharge operations, a change in volume of the negative electrode layer can be smaller than that of lithium metal sheets and lithium alloy sheets. Therefore, the all-solid-state cell can exhibit an excellent charge-discharge cycle characteristic and an increased capacity. Since the volume ratio of the carbonaceous material to the negative electrode layer is 70% or greater, the negative electrode layer can have a dense structure made up of the negative electrode active material, and can exhibit a high energy density. Furthermore, the all-solid-state cell can exhibit electron conductivity without the addition of a conductive aid.
[2] In the present invention, the carbonaceous material may be pre-doped with lithium. In this case, the initial irreversible capacity can be lowered, and a reduction in energy density can be prevented.
[3] In the present invention, the carbonaceous material may be an amorphous material. In this case, the carbonaceous material can exhibit a higher energy density as compared with other carbonaceous materials.
[4] In the present invention, the volume ratio of the carbonaceous material to the negative electrode layer preferably is 80% or greater.
[5] In the present invention, the volume ratio of the carbonaceous material to the negative electrode layer more preferably is 90% or greater.
[6] In the present invention, the positive electrode active material may have a layered rock salt structure or a spinel structure.
[7] In this case, the positive electrode active material may have a layered rock salt structure containing LiCoO₂ particles, and the predetermined crystal plane may be a (003) plane.
[8] Alternatively, the positive electrode active material may have a layered rock salt structure represented by the general formula Liₚ(Niₓ,Co_{y},Al_{z})O₂ where 0.9 ≤ p ≤ 1.3, 0.6 < x < 0.9, 0.1 < y ≤ 0.3, 0 ≤ z ≤ 0.2, x + y + z = 1, and the predetermined crystal plane may be a (003) plane.
[9] In the present invention, the solid electrolyte layer may contain a solid oxide electrolyte or a solid sulfide electrolyte.
[10] In this case, the solid electrolyte layer may contain the solid oxide electrolyte and may have a garnet-type crystalline structure containing Li₇La₃Zr₂O₁₂ (LLZ).

As described above, the all-solid-state cell of the present invention can exhibit an improved charge-discharge cycle characteristic and an improved energy density.

The above and other objects features and advantages of the present invention will become more apparent from the following description when taken in conjunction with the accompanying drawings, in which a preferred embodiment of the present invention is shown by way of illustrative example.

### BRIEF DESCRIPTION OF THE DRAWINGS

FIG. 1A is an exploded perspective view of a principal part of an all-solid-state cell according to an embodiment of the present invention;
FIG. 1B is a longitudinal sectional view of the principal part of the all-solid-state cell;
FIG. 2 is a view illustrating a method for calculating the carbonaceous material content of a negative electrode layer; and
FIG. 3 is a graph showing a cycle characteristic of the all-solid-state cell.

### DESCRIPTION OF THE PREFERRED EMBODIMENTS

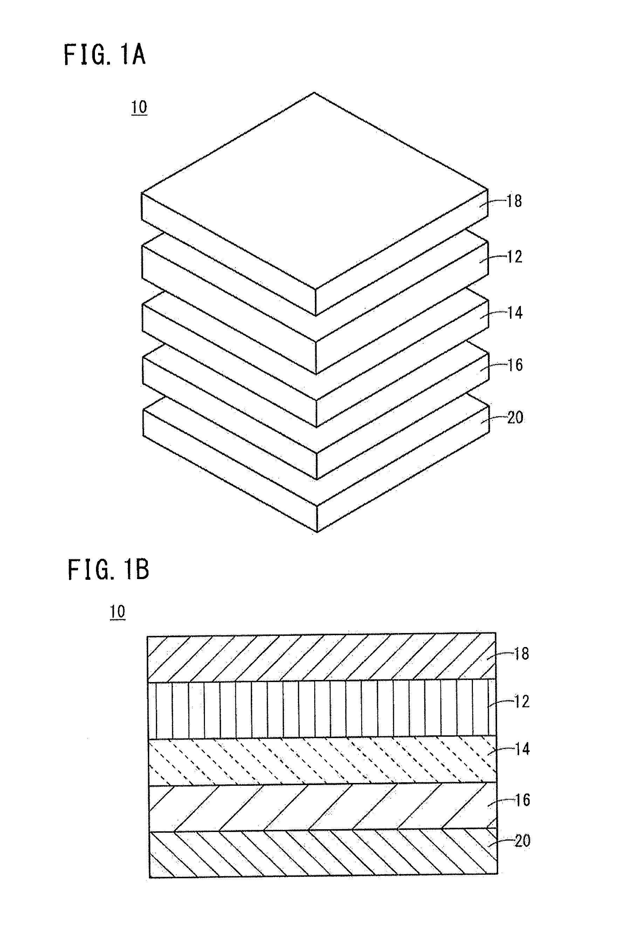

An embodiment of the all-solid-state cell of the present invention, which may be used in a lithium secondary battery or the like, will be described below with reference to FIGS. 1A to 3. In the following description, a numeric range of "A to B" includes both the numeric values A and B as lower limit and upper limit values thereof.

As shown in FIGS. 1A and 1B, an all-solid-state cell 10 according to the present embodiment includes a stack containing at least a positive electrode layer 12, a solid electrolyte layer 14, and a negative electrode layer 16. A positive electrode collector 18 is formed on a surface (e.g., the upper surface) of the positive electrode layer 12, and a negative electrode collector 20 is formed on a surface (e.g., the lower surface) of the negative electrode layer 16.

Thus, the all-solid-state cell 10 is formed by stacking the negative electrode collector 20, the negative electrode layer 16, the solid electrolyte layer 14, the positive electrode layer 12, and the positive electrode collector 18 in this order in a direction from the negative electrode to the positive electrode.

Respective materials of the positive electrode layer 12, the solid electrolyte layer 14, the negative electrode layer 16, the positive electrode collector 18, and the negative electrode collector 20 will be described below.

For example, each of the positive electrode collector 18 and the negative electrode collector 20 contains a metal foil (such as an aluminum foil or a copper foil).

The positive electrode layer 12 contains a plurality of particles of a lithium transition metal oxide (positive electrode active material), and directions of lithium ion conduction in the particles are oriented in one direction. In the present embodiment, the one direction is a direction from the positive electrode layer 12 toward the negative electrode layer 16. Thus, in the positive electrode layer 12, a predetermined crystal plane of each particle is oriented in the direction from the positive electrode layer 12 toward the negative electrode layer 16. The positive electrode layer 12 is formed by sintering only particles (of the positive electrode active material) that have predetermined crystal planes oriented in the direction of lithium ion conduction. The positive electrode active material has a layered rock salt structure or a spinel structure.

More specifically, in the case that the positive electrode active material has a layered rock salt structure, the particles preferably are LiCoO₂ particles, which are shaped into a sheet having a thickness of about 2 to 100 µm. It is particularly preferred that the predetermined crystal plane is a (003) plane, wherein the (003) plane is oriented in a direction from the positive electrode layer 12 toward the negative electrode layer 16.

Alternatively, the particles preferably have a composition that is represented by the following general formula, and the particles are shaped into a sheet having a thickness of about 2 to 100 µm.

General formula: Liₚ(Niₓ,Co_{y},Al_{z})O₂

where 0.9 ≤ p ≤ 1.3, 0.6 < x < 0.9, 0.1 < y ≤ 0.3, 0 ≤ z ≤ 0.2, x + y + z = 1.

Also in this case, preferably, the predetermined crystal plane is a (003) plane, in which the (003) plane is oriented in a direction from the positive electrode layer 12 toward the negative electrode layer 16.

Consequently, resistance against lithium ion emission from the positive electrode layer 12 and resistance to insertion of lithium ions into the positive electrode layer 12 can be lowered. Hence, a large amount of lithium ions can be emitted in a high input process (charging process), and a large amount of lithium ions can be introduced in a high output process (discharging process). Further, a plane other than a (003) plane, such as a (101) or (104) plane, may be oriented along the surface of the positive electrode layer 12. For details of such particles, see Japanese Patent Nos. 5043203 and 4745463.

The negative electrode layer 16 preferably contains a carbonaceous material. In this case, the volume ratio of the carbonaceous material to the negative electrode layer 16 preferably is 70% or greater. Examples of such carbonaceous materials include graphites, amorphous carbons, carbon nanotubes, and graphenes.

During charge and discharge operations, the volume change of the carbonaceous material can be less than that of lithium metal sheets and lithium alloy sheets. Therefore, the negative electrode layer 16 can exhibit an excellent charge-discharge cycle characteristic, and the capacity thereof can be improved. Since the volume ratio of the carbonaceous material to the negative electrode layer 16 is 70% or greater, the negative electrode layer 16 can have a dense active material structure, and is capable of exhibiting a high energy density. Furthermore, the negative electrode layer 16 can exhibit sufficient electron conductivity without the addition of a conductive aid.

In the charge-discharge cycle, the lithium ions are introduced into the negative electrode layer 16 in the first charging process, and a portion of the lithium ions are not emitted in the first discharging process. The amount of non-emitted lithium ions may be referred to as an initial irreversible capacity. However, a high initial irreversible capacity results in a reduction in energy density. Therefore, the negative electrode layer 16 may be pre-doped with lithium, so that a reduction in the initial irreversible capacity can be lowered, and a reduction in energy density can be prevented.

The solid electrolyte layer 14 may contain a solid oxide electrolyte or a solid sulfide electrolyte. In particular, a solid oxide electrolyte is preferred, because a solid oxide electrolyte can be handled safely in the atmosphere. For example, the solid oxide electrolyte preferably has a garnet-type or a garnet-like-type crystalline structure containing Li (lithium), La (lanthanum), Zr (zirconium), and O (oxygen). More specifically, the solid oxide electrolyte may have a garnet-type crystalline structure containing Li₇La₃Zr₂O₁₂ (LLZ).

In the foregoing manner, both the charge-discharge cycle characteristic and the energy density can both be improved in the all-solid-state cell 10 according to the present embodiment.

An example of a method for preparing the positive electrode layer 12, the negative electrode layer 16, and the solid electrolyte layer 14 will be described below.

### [Positive Electrode Layer 12]

### (a) Positive Electrode Layer 12 Containing LiCoO₂ Particles

A green sheet, which contains Co₃O₄ and Bi₂O₃ and has a thickness of 20 µm or less, is formed. The green sheet is fired at a temperature of 900°C to 1300°C for a predetermined time to form an independent film sheet (self-supported film). The self-supported film contains a large number of plate-like Co₃O₄ particles, which are (h00)-oriented in a planar direction. The phrase "(h00)-oriented in a planar direction" implies that the (h00) planes of the particles are oriented parallel to the plate surfaces of the particles. In the firing step, bismuth is volatilized and removed from the sheet, and Co₃O₄ is reduced and phase-transformed into CoO.

The term "independent sheet" (self-supported film) refers to a sheet which can be handled without supports after firing. Thus, the independent sheet does not include a sheet that becomes bonded to and integrated within a support (such as a substrate or the like) (i.e., a sheet that cannot be separated or is difficult to be separated from the support) during the firing step.

In such a self-supported type of green sheet in the form of a thin film, the amount of material is significantly smaller in the thickness direction than in the particle planar direction (i.e., an in-plane direction that is perpendicular to the thickness direction).

In an early stage at which plural particles are present in the thickness direction, grain growth progresses in random directions. During the grain growth process, after the material has been consumed in the thickness direction, the direction of grain growth becomes limited to two-dimensional in-plane directions. As a result, the grain growth is reliably facilitated in the planar directions.

Particularly, by means of forming the green sheet to the smallest possible thickness of, for example, several µm or less, or accelerating grain growth to the greatest possible extent despite a relatively large thickness of about 100 µm (e.g., about 20 µm), grain growth in planar directions can be more reliably accelerated.

During this step, only particles having lowest surface energy planes in the plane of the green sheet are grown preferentially into a flattened (plate-like) shape in the in-plane direction. In the resultant sheet, after firing, the plate-like CoO crystal particles have a high aspect ratio, and the predetermined crystal planes of the particles (the (h00) planes in this case) are oriented in a planar direction.

As the temperature drops, CoO is oxidized into Co₃O₄. During oxidation, the orientation of CoO is maintained, and thus the predetermined crystal planes of the plate-like Co₃O₄ crystal particles (the (h00) planes in this case) are oriented in a planar direction.

When oxidation of CoO into Co₃O₄ is carried out, the orientation degree often is lowered. This is because CoO and Co₃O₄ are significantly different in terms of the crystalline structures and the Co-O distances thereof, and the crystalline structures may be changed in a non-uniform manner during oxidation (i.e., insertion of oxygen atoms). Therefore, preferably, oxidation conditions are selected appropriately with the object of preventing a reduction in the orientation degree. For example, preferably, the rate at which the temperature drops is lowered, the sheet is maintained at a predetermined temperature, or the oxygen partial pressure is lowered.

Consequently, in the film sheet (self-supported film) obtained by firing the green sheet in the above manner, a large number of thin plate-like particles are bonded at the grain boundaries and are arranged in a planar direction, and the predetermined crystal planes of the particles are oriented in a planar direction. Thus, in the film sheet (self-supported film), substantially only one crystal particle is arranged in the thickness direction. The meaning of the phrase "substantially only one crystal particle is arranged in the thickness direction" does not exclude a state in which portions (such as ends) of in-plane adjacent crystal particles overlap with each other in the thickness direction. The self-supported film can comprise a dense ceramic sheet in which a large number of thin plate-like particles as mentioned above are closely bonded to each other.

An (h00)-oriented Co₃O₄ ceramic sheet, which is obtained according to the above processing step, is mixed with Li₂CO₃. The mixture is heated for a predetermined time, whereby lithium is introduced into the Co₃O₄ particles in order to obtain a sheet for the positive electrode layer 12. In the resultant sheet, the (003) plane is oriented in a direction that extends from the positive electrode layer 12 toward the negative electrode layer 16, and the (104) plane is oriented along the surface of the sheet.

### (b) Positive Electrode Layer 12 Containing Liₚ(Niₓ,Co_{y},Al_{z})O₂ Particles

A green sheet, which contains an NiO powder, a Co₃O₄ powder, and an Al₂O₃ powder, and having a thickness of 20 µm or less, is prepared. The green sheet is fired in the atmosphere at a temperature of 1000°C to 1400°C for a predetermined time in order to form an independent film sheet (self-supported film) containing a large number of (h00)-oriented plate-like (Ni,Co,Al)O particles. During this step, grain growth may be accelerated by adding an auxiliary agent such as MnO₂ or ZnO in order to improve the (h00) orientation of the plate-like crystal particles.

In the self-supported film, which is obtained by firing the green sheet in the above manner, a large number of thin plate-like particles are bonded at the grain boundaries and are arranged in a planar direction. Further, the predetermined crystal plane of each of the particles is oriented parallel to a plate surface of the particle. The self-supported film can be formed as a dense ceramic sheet, such that a large number of the plate-like particles are closely bonded to each other.

The (h00)-oriented (Ni,Co,Al)O ceramic sheet, which is obtained according to the above processing step, is mixed with lithium nitrate (LiNO₃). The mixture is heated for a predetermined time, whereby lithium is introduced into the (Ni,Co,Al)O particles in order to obtain an Li(Ni_{0.75}Co_{0.2}Al_{0.05})O₂ sheet for the positive electrode layer 12. In the resultant sheet, the (003) plane is oriented in a direction from the positive electrode layer 12 toward the negative electrode layer 16, and the (104) plane is oriented along the sheet surface.

### [Negative Electrode Layer 16]

### (a) Negative Electrode Layer 16 Containing Amorphous Carbon

For example, a carbon material and the solid electrolyte layer 14 (which is used as a base) are placed in a vacuum atmosphere, the carbon material is evaporated at high temperature, and the evaporated carbon is deposited on the solid electrolyte layer 14 to thereby form the negative electrode layer 16.

### (b) Negative Electrode Layer 16 Containing Carbon Nanotubes

For example, an iron catalyst is deposited on an entire surface of an alumina substrate, a quartz substrate, or a silicon substrate having a thermally-oxidized film to thereby form a catalyst metal layer. Typically, the iron catalyst is deposited by an RF plasma sputtering method, and the average thickness of the catalyst metal layer may be 2.5 nm. The catalyst metal layer is aggregated on the substrate in order to form an island structure. Examples of methods for depositing the catalyst metal layer further include DC plasma sputtering methods, impactor methods, ALD (atomic layer deposition) methods, electron beam (EB) evaporation methods, and molecular beam epitaxy (MBE) methods.

Then, for example, using a hot-filament chemical vapor deposition (CVD) method, a large number of carbon nanotube molecules are grown from the catalyst metal layer. The hot-filament CVD method may be carried out under a pressure of 1 kPa, at a substrate temperature of 620°C to 650°C (e.g. 650°C), and under the flow of a gas mixture comprising acetylene and argon as a source gas.

For example, the gas mixture may contain an acetylene gas and an argon gas, wherein the volume ratio between the acetylene and argon is 1:9, the gas mixture may be supplied at a flow rate of 200 sccm to a treatment vessel of a CVD apparatus, and a carrier gas may simultaneously be supplied at a flow rate of 100 sccm. In this manner, a bundle made up of a large number of carbon nanotube molecules having a diameter of 5 to 20 nm (carbon nanotube array) can be obtained with an areal density of about 10¹⁰ to 10¹² molecules per 1 cm².

The length of the carbon nanotube molecules can be controlled by selecting the growth conditions and the growth time of the CVD apparatus. For example, in the case that the catalyst metal layer has a thickness of 2.5 nm, the carbon nanotube molecules can be grown to a length of approximately 150 µm within a growth time of 60 minutes. Each of the grown carbon nanotube molecules has a main portion, and further has an approximately hemispherical cap formed at an end of the main portion.

Alternatively, the carbon nanotube molecules may be grown by an arc discharge method, a laser ablation method, a remote plasma CVD method, a plasma CVD method, a thermal CVD method, an SiC surface decomposition method, etc. The material for the carbon nanotube molecules is not limited to the above acetylene gas, and may contain a hydrocarbon such as methane or ethylene, an alcohol such as ethanol or methanol, etc. Furthermore, the catalyst for the catalyst metal layer is not limited to iron, and may be cobalt, nickel, iron, gold, silver, platinum, or an alloy thereof.

In addition to the catalyst metal layer, a metal or an alloy containing at least one of molybdenum, titanium, hafnium, zirconium, niobium, vanadium, tantalum nitride, titanium nitride, hafnium nitride, zirconium nitride, niobium nitride, vanadium nitride, titanium silicide, tantalum silicide, tungsten nitride, aluminum, aluminum nitride, aluminum oxide, molybdenum oxide, titanium oxide, tantalum oxide, hafnium oxide, zirconium oxide, niobium oxide, vanadium oxide, tungsten oxide, tantalum, tungsten, copper, gold, platinum, or the like may be used as an underlayer metal, an upper metal, or both thereof.

After growth of the carbon nanotubes, the caps are removed by heating the carbon nanotube molecules at a temperature of 450°C to 650°C in an oxygen atmosphere or in the atmosphere. In each of the carbon nanotube molecules, the cap is selectively burned and readily removed by heating in an oxygen-containing atmosphere. Removal of the caps occurs because the caps are primarily composed of 5-membered rings having chemically active double bonds. A carbon atom in the double bond is preferentially reacted with an oxygen atom (oxidized), and the generated carbon monoxide, carbon dioxide, or the like is readily removed. When one carbon atom is removed in this manner, the resultant defective portion exhibits higher activity. Therefore, the oxidation reaction proceeds continuously, so that the entire cap is removed. Consequently, in the resultant carbon nanotube molecules, the diameters of both openings thereof are approximately equal to each other.

For example, heating may be carried out at a substrate temperature of 550°C under an oxygen pressure of 1 kPa. Instead of a heating treatment, an oxygen plasma treatment or the like may be performed at room temperature to achieve removal of the caps. For example, the caps can be removed by performing an oxygen plasma treatment under a power of 200 W for 10 minutes. Alternatively, the carbon nanotube molecules may be covered with a resin, and the caps may be removed together with the resin by a chemical mechanical polishing (CMP) method.

### [Solid Electrolyte Layer 14]

In a first firing process, a material containing an Li component, an La component, and a Zr component is fired to obtain a primary fired powder containing Li, La, Zr, and oxygen for synthesizing a ceramic. For example, Li₂CO₃ or LiOH may be used as the Li component, La(OH)₃ or La₂O₃ may be used as the La component, and ZrO₂ may be used as the Zr component. In the first firing process, at least the Li and La components, etc., are thermally decomposed to obtain the primary fired powder. By preparing the primary fired powder in this manner, the LLZ crystalline structure can easily be formed in a second firing process. The LLZ crystalline structure may also be formed in the primary fired powder in the first firing process. The firing temperature preferably is 850°C to 1150°C.

Then, in the second firing process, the primary fired powder obtained by the first firing process is fired at a temperature of 950°C to 1250°C in order to prepare a ceramic powder having a garnet-type or garnet-like-type crystalline structure containing Li, La, Zr, and oxygen. A ceramic powder or sintered body, which has an LLZ crystalline structure, can contain aluminum, has a satisfactory sintered structure (density) to facilitate handling thereof, and has satisfactory conductivity, can be easily prepared in this manner. The second firing process preferably is carried out after the primary fired powder is formed into a desired three-dimensional shape or a compact (e.g., a shape with a size suitable for use as a solid electrolyte of a secondary all-solid-state cell). In the case of preparing such a compact (formed body), the solid-phase reaction can be accelerated, and the sintered body can easily be obtained. Alternatively, the sintered body may be produced by preparing the ceramic powder in the second firing process, forming the ceramic powder into a compact after the second firing process, and further sintering the compact (formed body). The sintering may be carried out at the same temperature as the second firing process. By the above processes, the solid electrolyte layer 14 having an LLZ crystalline structure can be obtained. Thus, by performing one or both of the first and second firing processes in the presence of an aluminum (Al) containing compound, the solid electrolyte layer 14 can be prepared with a satisfactory sintered structure (density) suitable for handling, and can exhibit satisfactory conductivity.

The solid electrolyte layer 14 may be formed using a particle jet coating method, a solid phase method, a solution method, a gas phase method, or a direct bonding method. The particle jet coating method may be an aerosol deposition (AD) method, a gas deposition (GD) method, a powder jet deposition (PJD) method, a cold spray (CS) method, a thermal spraying method, etc., and particularly preferably, an aerosol deposition (AD) method is used. In such an aerosol deposition (AD) method, the solid electrolyte layer 14 can be formed at ordinary temperature, and thus the composition of the layer is not changed during the process, and a high-resistance layer is not formed by reaction with the positive electrode. The solid phase method may be a tape lamination method, a printing method, etc., and particularly preferably, a tape lamination method is used. In such a tape lamination method, the solid electrolyte layer 14 can be formed with a small thickness, and the thickness of the solid electrolyte layer 14 can easily be controlled. The solution method may be a hydrothermal synthesis method, a sol-gel method, a precipitation method, a microemulsion method, a solvent evaporation method, etc., and particularly preferably, a hydrothermal synthesis method is used. In the hydrothermal synthesis method, crystal particles with high crystallinity can easily be obtained at low temperature. Microcrystals, which are synthesized by such a method, may be placed on the positive electrode or may be deposited directly on the positive electrode. The gas phase method may be a pulsed laser deposition (PLD) method, a sputtering method, a physical vapor deposition (PVD) method, a chemical vapor deposition (CVD) method, a vacuum vapor deposition method, a molecular beam epitaxy (MBE) method, etc., and particularly preferably, a pulsed laser deposition (PLD) method is used. In such a pulsed laser deposition (PLD) method, the solid electrolyte layer 14 can be prepared with reduced composition non-uniformity and relatively high crystallinity. In the direct bonding method, surfaces of the solid electrolyte layer 14 and the positive electrode layer 12, which are formed in advance, are made chemically active and are bonded with each other at low temperature. Activation of the surface may be achieved by subjecting the surface to a plasma treatment or the like, or by chemically modifying the surface with a functional group such as a hydroxyl group.

### [Examples]

In Examples 1 to 7 and Comparative Example 1, a charge-discharge test was carried out in order to evaluate energy density, initial irreversible capacity ratio, and cycle characteristics. The evaluation results are shown in Table 1.

Examples 1 to 7 and Comparative Example 1 were formed respectively in the following manner.

### (Example 1)

A positive electrode layer 12, a solid electrolyte layer 14, and a negative electrode layer 16 having the following compositions were formed to thereby produce an all-solid-state cell of Example 1.

The positive electrode layer 12 contained LiCoO₂ particles, and the predetermined (003) crystal planes of the particles were oriented in a direction from the positive electrode layer 12 toward the negative electrode layer 16. This material is indicated by "Oriented LCO" in Table 1. The positive electrode layer 12 had a length of 10 mm, a width of 10 mm, and a thickness of 30 µm, as viewed from above. The solid electrolyte layer 14 had a garnet-type crystalline structure containing Li₇La₃Zr₂O₁₂ (LLZ). This material is indicated by "LLZ" in Table 1. The solid electrolyte layer 14 had a length of 10 mm, a width of 10 mm, and a thickness of 10 µm, as viewed from above. The negative electrode layer 16 contained an amorphous carbon as a carbonaceous material. This material is indicated by "Amorphous C" in Table 1. The negative electrode layer 16 had a length of 10 mm, a width of 10 mm, and a thickness of 13 µm, as viewed from above.

The volume ratio of the carbonaceous material to the negative electrode layer 16 (hereinafter referred to as carbonaceous material content) was 79%.

The carbonaceous material content was obtained in the following manner. First, an image of a section of the negative electrode layer 16 was captured by SEM (scanning electron microscopy). In the obtained image field, an area of components other than the carbonaceous material was calculated. Then, the area ratio of the carbonaceous material in the field was calculated using the expression {1-(area of other components)/(area of field)} × 100.

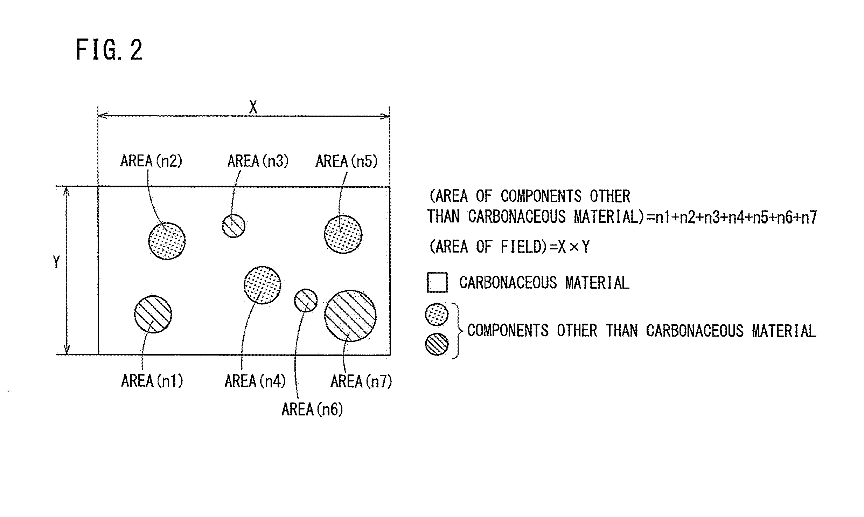

For example, as shown in FIG. 2, in the case that seven components other than the carbonaceous material are contained in a field having a vertical size of Y (µm) and a horizontal size of X (µm), the total of the areas n1, n2, n3, n4, n5, n6, and n7 of the seven components corresponds to the area of the components other than the carbonaceous material, and the field has an area of Y (µm) × X (µm).

A plurality of sections were arbitrarily selected in the negative electrode layer 16, the carbonaceous material area ratios of the sections were calculated, and the average of the area ratios was obtained as the carbonaceous material content. The carbonaceous material content of Example 1 was 79%.

In Example 1, the negative electrode layer 16 was not pre-doped with lithium.

In a charge-discharge test, the charge-discharge cycle was repeated 100 times. Each charge-discharge cycle was performed in the following manner. First, a constant current charge at 0.5 mA was carried out. After the cell voltage reached the upper limit voltage (4.1 V), a constant voltage charge was carried out until the value of the current reached 0.025 mA. The all-solid-state cell was left for 30 minutes, and then a constant current discharge at 0.5 mA was carried out. The charge-discharge cycle was completed when the cell voltage reached a lower limit voltage (3.0 V).

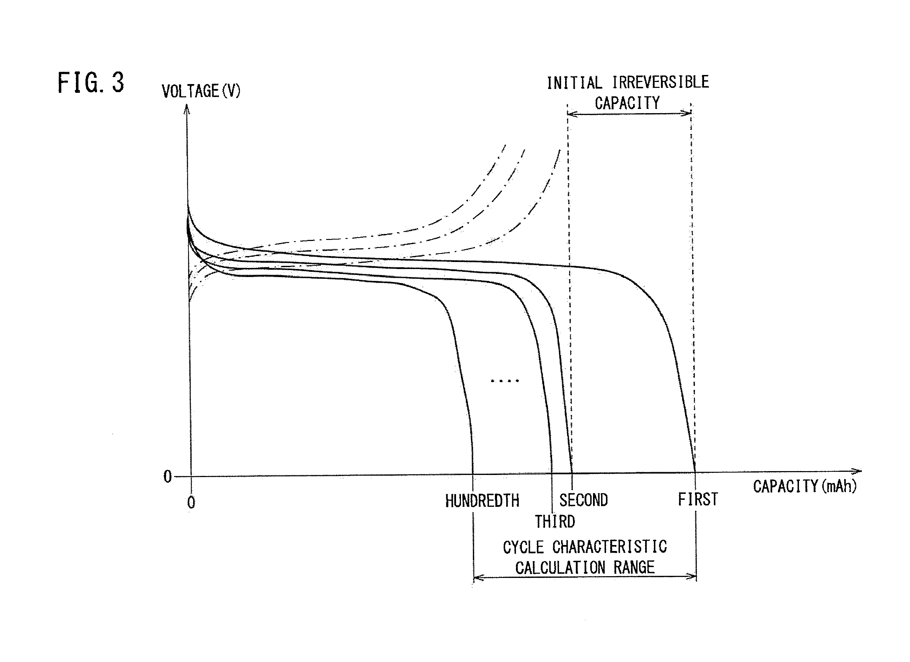

As shown in the cycle characteristic of FIG. 3, in general, a high capacity is observed in the first cycle, and in the second cycle, the capacity is reduced by an initial irreversible capacity from the first capacity. As described above, lithium ions are introduced to the negative electrode layer 16 in the first charging process, and a portion of the lithium ions are not emitted in the first discharging process. The amount of the non-emitted lithium ions is referred to as an initial irreversible capacity. In the cycle characteristic, the capacity is lowered as the cycle number increases.

The charge-discharge cycle was repeated 100 times, and the energy density obtained in the second charge-discharge cycle is shown in Table 1. The energy density of Example 1 was 524 Wh/L.

The initial irreversible capacity ratio was calculated using the expression {1-(initial discharge capacity)/(initial charge capacity)} × 100. In this expression, the initial charge capacity is the charge capacity in the first charge-discharge cycle, and the initial discharge capacity is the discharge capacity in the first charge-discharge cycle.

Based on the discharge capacity in the second charge-discharge cycle (the second discharge capacity) and the discharge capacity in the hundredth charge-discharge cycle (the hundredth discharge capacity), the cycle characteristic was calculated using the following expression {1-(hundredth discharge capacity)/(second discharge capacity)} × 100.

The cycle characteristic of Example 1 was 73%.

### (Example 2)

An all-solid-state cell of Example 2 was produced in the same manner as Example 1, except that the amount of impurities added to the negative electrode layer 16 was changed. In Example 2, the carbonaceous material content was 83%, the energy density was 530 Wh/L, the initial irreversible capacity ratio was 40%, and the cycle characteristic was 69%.

### (Example 3)

An all-solid-state cell of Example 3 was produced in the same manner as Example 1, except that the amount of impurities added to the negative electrode layer 16 was changed. In Example 3, the carbonaceous material content was 90%, the energy density was 536 Wh/L, the initial irreversible capacity ratio was 40%, and the cycle characteristic was 70%.

### (Example 4)

An all-solid-state cell of Example 4 was produced in the same manner as Example 1, except that the amount of impurities added to the negative electrode layer 16 was changed. In Example 4, the carbonaceous material content was 96%, the energy density was 541 Wh/L, the initial irreversible capacity ratio was 39%, and the cycle characteristic was 72%.

### (Example 5)

An all-solid-state cell of Example 5 was produced in the same manner as Example 1, except that the amount of impurities added to the negative electrode layer 16 was changed, and the negative electrode layer 16 was pre-doped with lithium. In Example 5, the carbonaceous material content was 95%, the energy density was 841 Wh/L, the initial irreversible capacity ratio was 6%, and the cycle characteristic was 70%.

### (Example 6)

An all-solid-state cell of Example 6 was produced in the same manner as Example 1, except that carbon nanotubes (CNT) were used as the carbonaceous material in the negative electrode layer 16. In Example 6, the carbonaceous material content was 88%, the energy density was 533 Wh/L, the initial irreversible capacity ratio was 21%, and the cycle characteristic was 65%.

### (Example 7)

An all-solid-state cell of Example 7 was produced in the same manner as Example 1, except that the positive electrode layer 12 contained particles having a composition represented by the following general formula (hereinafter referred to as "Oriented NCA"), the predetermined (003) crystal planes of the particles were oriented in a direction from the positive electrode layer 12 toward the negative electrode layer 16, and the negative electrode layer 16 was pre-doped with lithium.

General formula: Liₚ(Niₓ,Co_{y},Al_{z})O₂

where 0.9 ≤ p ≤ 1.3, 0.6 < x < 0.9, 0.1 < y ≤ 0.3, 0 ≤ z ≤ 0.2, x + y + z = 1.

In Example 7, the carbonaceous material content was 94%, the energy density was 935 Wh/L, the initial irreversible capacity ratio was 5%, and the cycle characteristic was 71%.

### (Comparative Example 1)

An all-solid-state cell of Comparative Example 1 was produced in the same manner as Example 1, except that the negative electrode layer 16 contained a mixture of the carbonaceous material of amorphous carbon and the solid electrolyte material of LLZ. In Comparative Example 1, the carbonaceous material content was 58%, the energy density was 490 Wh/L, the initial irreversible capacity ratio was 35%, and the cycle characteristic was 54%.

**[Table 1]**

| | Positive electrode layer | Solid electrolyte layer | Negative electrode layer | Carbonaceous material content | Li predoping | Energy density (Wh/L) | Initial irreversible capacity ratio | Cycle characteristic |
|---|---|---|---|---|---|---|---|---|
| Ex. 1 | Oriented LCO | LLZ | Amorphous C | 79% | Not performed | 524 | 38% | 73% |
| Ex. 2 | Oriented LCO | LLZ | Amorphous C | 83% | Not performed | 530 | 40% | 69% |
| Ex. 3 | Oriented LCO | LLZ | Amorphous C | 90% | Not performed | 536 | 40% | 70% |
| Ex. 4 | Oriented LCO | LLZ | Amorphous C | 96% | Not performed | 541 | 39% | 72% |
| Ex. 5 | Oriented LCO | LLZ | Amorphous C | 95% | Performed | 841 | 6% | 70% |
| Ex. 6 | Oriented LCO | LLZ | CNT | 88% | Not performed | 533 | 21% | 65% |
| Ex. 7 | Oriented NCA | LLZ | Amorphous C | 94% | Performed | 935 | 5% | 71% |
| Comp. Ex. 1 | Oriented LCO | LLZ | Amorphous C + LLZ | 58% | Not performed | 490 | 35% | 54% |

As shown in Table 1, in Examples 1 to 7, advantageously, the negative electrode layers 16 had a carbonaceous material content of 70% or greater, and the all-solid-state cells exhibited energy densities in excess of 500 Wh/L, and cycle characteristics of at least 65%.

In Example 6, carbon nanotubes (which were not pre-doped with lithium) were used as the carbonaceous material in the negative electrode layer 16. Therefore, as compared with the all-solid-state cells of Examples 1 to 4 (which were not pre-doped with lithium), the all-solid-state cell of Example 6 exhibited a lower initial irreversible capacity ratio, but was slightly deteriorated in terms of the cycle characteristic.

In Examples 5 and 7, the negative electrode layers 16 were pre-doped with lithium. Therefore, as compared with the all-solid-state cells of the other examples, advantageously, the all-solid-state cells of Examples 5 and 7 exhibited significantly lower initial irreversible capacity ratios of 6% and 5%. Furthermore, the all-solid-state cells of Examples 5 and 7 exhibited cycle characteristics of 70% or greater. In particular, in Example 7, Oriented NCA was used in the positive electrode layer 12. Therefore, as compared with the all-solid-state cell of Example 5 (which contained Oriented LCO, had approximately the same carbonaceous material content, and was pre-doped with lithium), the all-solid-state cell of Example 7 exhibits a higher energy density. In addition, the all-solid-state cell of Example 7 had well-balanced properties, including an energy density of 935 Wh/L, an initial irreversible capacity ratio of 5%, and a cycle characteristic of 71%.

In contrast, in Comparative Example 1, since the negative electrode layer 16 had a carbonaceous material content of less than 70%, the all-solid-state cell exhibited a poor cycle characteristic and a low energy density.

Thus, the carbonaceous material content of the negative electrode layer 16 preferably is 70% or greater, more preferably, is 80% or greater, and further preferably, is 90% or greater. Furthermore, the lithium pre-doping results in a low initial irreversible capacity ratio and a high energy density.

An all-solid-state cell (10) contains at least a positive electrode layer (12), a solid electrolyte layer (14), and a negative electrode layer (16), which are arranged in a stack. The positive electrode layer (12) contains only a positive electrode active material, and a predetermined crystal plane of the positive electrode active material is oriented in a direction of lithium ion conduction. The negative electrode layer (16) contains a carbonaceous material, and the volume ratio of the carbonaceous material to the negative electrode layer (16) is 70% or greater.

## Claims

1. An all-solid-state cell comprising at least a positive electrode layer (12), a solid electrolyte layer (14), and a negative electrode layer (16), which are arranged in a stack, wherein:
the positive electrode layer (12) contains only a positive electrode active material;
a predetermined crystal plane of the positive electrode active material is oriented in a direction of lithium ion conduction;
the negative electrode layer (16) contains a carbonaceous material; and
a volume ratio of the carbonaceous material to the negative electrode layer (16) is 70% or greater.

2. The all-solid-state cell according to claim 1, wherein the carbonaceous material is pre-doped with lithium.

3. The all-solid-state cell according to claim 1 or 2, wherein the carbonaceous material is an amorphous material.

4. The all-solid-state cell according to any one of claims 1 to 3, wherein the volume ratio of the carbonaceous material to the negative electrode layer (16) is 80% or greater.

5. The all-solid-state cell according to any one of claims 1 to 4, wherein the volume ratio of the carbonaceous material to the negative electrode layer (16) is 90% or greater.

6. The all-solid-state cell according to any one of claims 1 to 5, wherein the positive electrode active material has a layered rock salt structure or a spinel structure.

7. The all-solid-state cell according to claim 6, wherein:
the positive electrode active material has a layered rock salt structure containing LiCoO₂ particles; and
the predetermined crystal plane is a (003) plane.

8. The all-solid-state cell according to claim 6, wherein:
the positive electrode active material has a layered rock salt structure represented by a general formula Liₚ(Niₓ,Coₓ,Al_{z})O₂ where 0.9 ≤ p ≤ 1.3, 0.6 < x < 0.9, 0.1 < y ≤ 0.3, 0 ≤ z ≤ 0.2, x + y + z = 1; and
the predetermined crystal plane is a (003) plane.

9. The all-solid-state cell according to any one of claims 1 to 8, wherein the solid electrolyte layer (14) contains a solid oxide electrolyte or a solid sulfide electrolyte.

10. The all-solid-state cell according to claim 9, wherein the solid electrolyte layer (14) contains the solid oxide electrolyte and has a garnet-type crystalline structure containing Li₇La₃Zr₂O₁₂ (LLZ).
